# EUROPÄISCHE PATENTSCHRIFT

(11) **EP 3 787 769 B1**
(45) Veröffentlichungstag und Bekanntmachung des Hinweises auf die Patenterteilung: **04.05.2022**
(21) Anmeldenummer: 19721284.8
(22) Anmeldetag: 02.05.2019
(51) Int. Cl.: B01D 35/153, B01D 29/23, F02M 37/48

(54) **KRAFTSTOFFFILTERELEMENT UND FILTERANORDNUNG**
FUEL FILTER ELEMENT AND FILTER ASSEMBLY
ÉLÉMENT FILTRANT À CARBURANT ET DISPOSITIF FILTRANT

(30) Priorität: 03.05.2018 DE 102018003551
(43) Veröffentlichungstag der Anmeldung: 10.03.2021
(73) Patentinhaber: MANN+HUMMEL GmbH, 71636 Ludwigsburg (DE)
(72) Erfinder: OPRISCH, Christine, 71739 Oberriexingen (DE); WEINDORF, Martin, 70806 Kornwestheim (DE); VEIT, Martin, 71116 Gärtringen (DE); LIPPERT, Felix, 89407 Dillingen (DE)
(74) Vertreter: Mann + Hummel Intellectual Property
(86) Internationale Anmeldenummer: PCT/EP2019/061267
(87) Internationale Veröffentlichungsnummer: WO 2019/211387

(56) Entgegenhaltungen:
- WO-A1-2016/146424
- DE-A1-102010 043 218
- DE-A1-102015 012 556

## Beschreibung

### Technisches Gebiet

Die vorliegende Erfindung betrifft ein Kraftstofffilterelement und eine Filteranordnung mit einem derartigen Filterelement.

### Stand der Technik

Ein Kraftfahrzeug, beispielsweise ein Lastkraftwagen, kann eine Brennkraftmaschine, beispielsweise einen Dieselmotor, umfassen. Bevor einer Niederdruckpumpe eines Einspritzsystems eines derartigen Dieselmotors der Dieselkraftstoff zugeführt wird, wird dieser mit Hilfe eines Siebfilters gefiltert. Derartige Siebfilter mit inneren Stützrippen sind in der WO2016146424 und der DE102010043218 offenbart. Dem Siebfilter vorgeordnet kann ein Rückschlagventil vorgesehen sein, das ein Eindringen von Luft in eine den Dieselkraftstoff dem Siebfilter zuführende Kraftstoffleitung verhindert.

### Offenbarung der Erfindung

Es ist daher Aufgabe der Erfindung, ein verbessertes Kraftstofffilterelement zur Verfügung zu stellen.

Demgemäß wird ein Kraftstofffilterelement, insbesondere ein Siebfilterelement zum Filtern von Dieselkraftstoff, vorgeschlagen. Das Filterelement umfasst ein Siebgewebe als Filtermedium und ein Stützrohr, welches das Siebgewebe stützt. Ferner umfasst es eine Ventilkörperführung zum Führen eines kugelförmigen Ventilkörpers, wobei die Ventilkörperführung einen Fluidkanal und zumindest eine sich entlang einer Längsrichtung des Fluidkanals erstreckende Auflagerippe für den Ventilkörper aufweist, und wobei die zumindest eine Auflagerippe radial in den Fluidkanal hineinragt. Das Filterelement ist insbesondere dazu eingerichtet, Kraftstoffe, wie Benzin, Dieselkraftstoff oder Kerosin, zu filtern. Bevorzugt ist das Filterelement ein Siebfilter zum Filtern von Dieselkraftstoff eines Fahrzeugs. Das Filterelement ist insbesondere dazu eingerichtet, Verunreinigungen, insbesondere Partikel und Schwebstoffe, aus Dieselkraftstoff abzutrennen. Das Filterelement kann Anwendung in Kraftfahrzeugen, Wasserfahrzeugen, Schienenfahrzeugen, landwirtschaftlichen Fahrzeugen, Baumaschinen, Luftfahrzeugen oder dergleichen finden. Ferner kann das Filterelement auch bei immobilen Anwendungen, wie beispielsweise in der Gebäudetechnik, eingesetzt werden.

Das Filterelement ist insbesondere im Wesentlichen rotationssymmetrisch zu einer Mittel- oder Symmetrieachse aufgebaut. Die Längsrichtung des Fluidkanals ist dabei parallel zu oder entlang der Symmetrieachse orientiert. Eine Radialrichtung des Fluidkanals ist dabei senkrecht zu der Längsrichtung und von der Symmetrieachse weg in Richtung einer Innenwandung des Fluidkanals orientiert. Insbesondere ragt die zumindest eine Auflagerippe in der Radialrichtung in den Fluidkanal hinein. Vorzugsweise ragt die zumindest eine Auflagerippe nur so weit in den Fluidkanal hinein, dass diese sich nicht über einen gesamten Durchmesser des Fluidkanals erstreckt. Die zumindest eine Auflagerippe überbrückt den Fluidkanal somit vorzugsweise nicht vollständig. Die zumindest eine Auflagerippe ragt vorzugsweise zumindest so weit radial in den Fluidkanal hinein, dass der Ventilkörper nicht durch den Fluidkanal hindurchführbar ist. Der Fluidkanal kann einen kreisrunden Querschnitt aufweisen. Der Fluidkanal kann allerdings auch jeden anderen beliebigen Querschnitt aufweisen.

Das Filterelement umfasst vorzugsweise ein Filtermedium in Form eines engmaschigen Netzes, insbesondere Kunststoffnetzes oder -siebes. In Ausführungsformen kann das engmaschige Netz oder Siebgewebe auch aus anderen Werkstoffen bestehen, etwa Metalle oder Metalllegierungen umfassen. Beispielsweise kann das Filtermedium eine Maschenweite von 300 µm aufweisen. Weiterhin umfasst das Filterelement ein Stützrohr, welches das Filtermedium stützt. Das Stützrohr kann das Filtermedium von außen oder von innen abstützen. Beispielsweise ist das Stützrohr in einem Kunststoffspritzgussverfahren an das Filtermedium angespritzt. Die Ventilkörperführung ist vorzugsweise mit Hilfe eines Verbindungsabschnitts einteilig mit dem Stützrohr verbunden.

Dadurch, dass die Auflagerippe in den Fluidkanal hineinragt, kann eine Fehlmontage des Ventilkörpers verhindert werden, da dieser nicht durch den Fluidkanal hindurchschiebbar ist. Da der Ventilkörper auf der zumindest einen Auflagerippe aufliegen kann, ist zum einen eine definierte Position des Ventilkörpers gewährleistet und zum anderen wird ein Strömungsquerschnitt des Fluidkanals nur geringfügig verkleinert. Dies führt dazu, dass eine Strömungsgeschwindigkeit eines zu filternden Rohfluids bei einem Umströmen des Ventilkörpers nur unwesentlich erhöht wird. Beide zuvor genannten Effekte verhindern zuverlässig ein Drehen des Ventilkörpers und damit einen unerwünschten Verschleiß desselben.

In Ausführungsformen ist die Ventilkörperführung lösbar mit dem Filterelement verbunden. Unter "lösbar" ist vorliegend zu verstehen, dass die Ventilkörperführung zerstörungsfrei von dem Filterelement getrennt werden kann. Beispielsweise ist die Ventilkörperführung mit dem Filterelement verschraubt, verclipst oder verschnappt. Alternativ kann die Ventilkörperführung auch untrennbar mit dem Filterelement verbunden sein. In diesem Fall ist die Ventilkörperführung beispielsweise einteilig mit dem zuvor erwähnten Stützrohr ausgebildet.

In Ausführungsformen weist die zumindest eine Auflagerippe eine gekrümmte, insbesondere eine kugelförmig gekrümmte oder kreiszylinderförmig gekrümmte, Auflagefläche auf. Das heißt, eine Geometrie der Auflagefläche ist an eine Außenkontur des Ventilkörpers angepasst. Hierdurch ergibt sich ein guter Sitz des Ventilkörpers auf der zumindest einen Auflagerippe. Hierdurch wird ein Drehen des Ventilkörpers zuverlässig verhindert.

In Ausführungsformen weist die Ventilkörperführung zumindest zwei Auflagerippen auf. Vorzugsweise sind mehr als zwei Auflagerippen vorgesehen. Beispielsweise sind drei Auflagerippen vorgesehen, die gleichmäßig um einen Umfang des Fluidkanals verteilt angeordnet sind. Beispielsweise sind die drei Auflagerippen in einem Umfangswinkel von 120° relativ zueinander positioniert. Für den Fall, dass die Ventilkörperführung zwei Auflagerippen aufweist, sind diese in einem Umfangswinkel von 180° zueinander positioniert. Die Ventilkörperführung kann allerdings auch nur eine Auflagerippe oder mehr als drei Auflagerippen aufweisen.

In Ausführungsformen ragen die Ventilkörperführung und die zumindest eine Auflagerippe bis in einen Innenraum des Filterelements hinein. Der Innenraum des Filterelements wird bevorzugt von dem Filtermedium umgrenzt. Vorzugsweise umfasst die Ventilkörperführung ein Steigrohr, das in den Innenraum hineinragt. Die zumindest eine Auflagerippe verläuft innerhalb des Steigrohrs in den Innenraum hinein.

Die Ventilkörperführung weist ein Kopplungsrohr, durch das sich der Fluidkanal hindurcherstreckt, und zumindest einen sich stirnseitig aus dem Kopplungsrohr herauserstreckenden Führungsabschnitt auf, wobei sich die zumindest eine Auflagerippe zumindest abschnittsweise entlang des zumindest einen Führungsabschnitts erstreckt. Das heißt, die zumindest eine Auflagerippe erstreckt sich bevorzugt über eine Stirnfläche des Kopplungsrohrs hinaus. Die Ventilkörperführung umfasst ferner bevorzugt das zuvor erwähnte Steigrohr. Das Steigrohr und das Kopplungsrohr sind vorzugsweise einteilig, insbesondere materialeinstückig, ausgebildet, wobei sich der Fluidkanal sowohl durch das Kopplungsrohr als auch durch das Steigrohr hindurcherstreckt. Vorzugsweise sind mehrere derartige Führungsabschnitte vorgesehen. Beispielsweise sind drei Führungsabschnitte vorgesehen, wobei jedem Führungsabschnitt eine Auflagerippe zugeordnet ist. Beispielsweise sind drei Führungsabschnitte vorgesehen, die gleichmäßig um einen Umfang der Ventilkörperführung verteilt angeordnet sind. Zwischen den Führungsabschnitten sind Zwischenräume vorgesehen, durch die das Rohfluid hindurch um den Ventilkörper herum in den Fluidkanal einströmen kann. Das Kopplungsrohr ist geeignet, in einem Aufnahmebereich eines Filtergehäuses aufgenommen zu werden. Hierdurch kann das Filterelement mit dem Filtergehäuse gekoppelt werden. Das Kopplungsrohr umfasst vorzugsweise umlaufende Ringnuten, in denen Dichtelemente, insbesondere O-Ringe, aufgenommen sein können. Mit Hilfe der Dichtelemente kann das Kopplungsrohr gegenüber dem Aufnahmebereich des Filtergehäuses abgedichtet werden.

Gemäß einer bevorzugten Ausführungsform kann sich der Führungsabschnitt in Umfangsrichtung erstrecken und eine deutlich größere umfangsmäßige Ausdehnung haben als die Auflagerippe. Insbesondere kann die umfangsmäßige Ausdehnung des Führungsabschnitts zumindest doppelt so groß sein wie die umfangsmäßige Ausdehnung der Auflagerippe, bevorzugt zumindest dreimal so groß. Hierdurch wird durch den Führungsabschnitt ein besonders wirksames "Einfangen" des Ventilkörpers ermöglicht, noch bevor dieser auf Anschlag an der Auflagerippe kommt.

Darüber hinaus kann der Führungsabschnitt die Auflagerippe auf einem radial äußeren Umfang umgeben, was die vorbeschriebene Einfangfunktion noch weiter verbessert. In Ausführungsformen ist der zumindest eine Führungsabschnitt trapezförmig. Der zumindest eine Führungsabschnitt kann jedoch auch rechteckförmig sein oder jede beliebige andere Geometrie aufweisen.

In Ausführungsformen ist ein Durchmesser des Fluidkanals größer als ein Durchmesser des Ventilkörpers. Alternativ können der Durchmesser des Fluidkanals und der Durchmesser des Ventilkörpers auch gleich groß sein oder der Durchmesser des Ventilkörpers ist kleiner als der Durchmesser des Fluidkanals. Insbesondere ist der Durchmesser des Ventilkörpers jedoch so groß, dass dieser auf der zumindest einen Auflagerippe aufliegt und somit nicht in den Fluidkanal eingeführt werden kann.

Ferner wird eine Filteranordnung, insbesondere eine Siebfilteranordnung zum Filtern von Dieselkraftstoff, vorgeschlagen. Die Filteranordnung ist demgemäß insbesondere als Kraftstofffilteranordnung ausgebildet. Die Filteranordnung umfasst ein wie zuvor erläutertes Filterelement, ein Filtergehäuse und ein Kugelventil, das den kugelförmigen Ventilkörper umfasst, wobei das Filtergehäuse einen Ventilsitz für den Ventilkörper aufweist, wobei der Ventilkörper in einem geschlossenen Zustand des Kugelventils an dem Ventilsitz anliegt, und wobei der Ventilkörper in einem geöffneten Zustand des Kugelventils an der zumindest einen Auflagerippe anliegt.

Das Kugelventil umfasst ferner insbesondere die gekrümmte Auflagefläche der zumindest einen Auflagerippe. Das Kugelventil ist insbesondere ein Rückschlagventil. Das Kugelventil kann mit Hilfe des von gegen den Ventilkörper strömenden Rohfluids von dem geschlossenen Zustand in den geöffneten Zustand verbracht werden. Der Ventilkörper ist beispielsweise aus einem Kunststoffmaterial gefertigt. Bevorzugt weist das Kunststoffmaterial eine geringere Dichte als das Rohfluid auf, so dass der Ventilkörper in dem Rohfluid nicht aufschwimmt, sondern in diesem absinkt. Somit wird das Kugelventil dann, wenn kein Rohfluid mehr gegen den Ventilkörper strömt, selbsttätig von dem geöffneten Zustand in den geschlossenen Zustand verbracht. Das Filtergehäuse umfasst vorzugsweise einen Filtergehäusetopf, in dem das Filterelement aufnehmbar ist, sowie den zuvor erwähnten Aufnahmebereich, in dem das Kopplungsrohr des Filterelements aufnehmbar ist. Das Filtergehäuse umfasst weiterhin einen Filtergehäusedeckel, der lösbar mit dem Filtergehäusetopf verbunden werden kann. Beispielsweise kann der Filtergehäusedeckel auf den Filtergehäusetopf aufgeschraubt werden. Der Filtergehäusedeckel kann mit Hilfe eines Bajonettverschlusses mit dem Filterelement gekoppelt sein.

In Ausführungsformen ist der Ventilsitz gekrümmt, insbesondere kugelförmig gekrümmt. Das heißt, eine Geometrie des Ventilsitzes ist an eine Außenkontur des Ventilkörpers angepasst. Hierdurch ergibt sich eine besonders gute Abdichtung des Ventilkörpers gegenüber dem Ventilsitz. Der Ventilsitz kann alternativ auch kegelstumpfförmig sein.

### Kurze Beschreibung der Zeichnungen

Es zeigt dabei:
- Fig. 1:: eine schematische Teilschnittansicht einer Ausführungsform einer Filteranordnung;
- Fig. 2.: eine weitere schematische Teilschnittansicht der Filteranordnung gemäß Fig. 1;
- Fig. 3:: eine weitere schematische Teilschnittansicht der Filteranordnung gemäß Fig. 1;
- Fig. 4:: eine schematische perspektivische Ansicht einer Ausführungsform eines Filterelements für die Filteranordnung gemäß Fig. 1;
- Fig. 5:: eine schematische Schnittansicht des Filterelements gemäß Fig. 4; und
- Fig. 6:: eine weitere schematische Schnittansicht des Filterelements gemäß Fig. 4.

In den Figuren sind gleiche oder funktionsgleiche Elemente, sofern nichts anderes angegeben ist, mit denselben Bezugszeichen versehen worden.

### Ausführungsform(en) der Erfindung

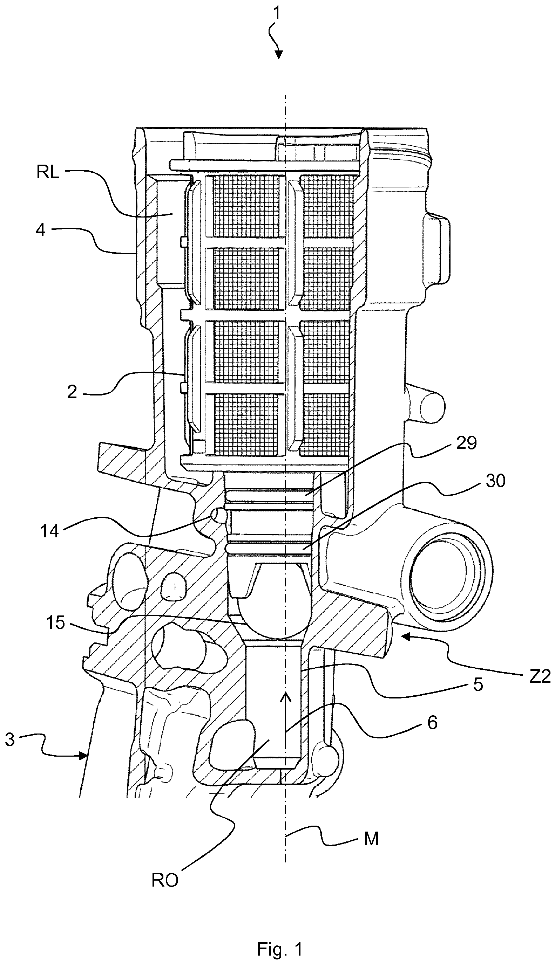

Die Fig. 1 bis 3 zeigen jeweils eine schematische Teilschnittansicht einer Ausführungsform einer Filteranordnung 1. Die Filteranordnung 1 kann geeignet sein, flüssige Betriebsmittel eines Fahrzeugs, beispielsweise Kraftstoffe, wie Dieselkraftstoff, Kerosin oder Benzin, zu filtern. Bevorzugt findet die Filteranordnung 1 in Kraftfahrzeugen, insbesondere in Personenkraftwagen, Lastkraftwagen, Baufahrzeugen oder landwirtschaftlichen Maschinen, in Wasserfahrzeugen, in Schienenfahrzeugen oder in Luftfahrzeugen Anwendung. Weiterhin kann die Filteranordnung 1 beispielsweise in der Gebäudetechnik Anwendung finden. Bevorzugt ist die Filteranordnung 1 eine Siebfilteranordnung, die geeignet ist, Dieselkraftstoff zu filtern.

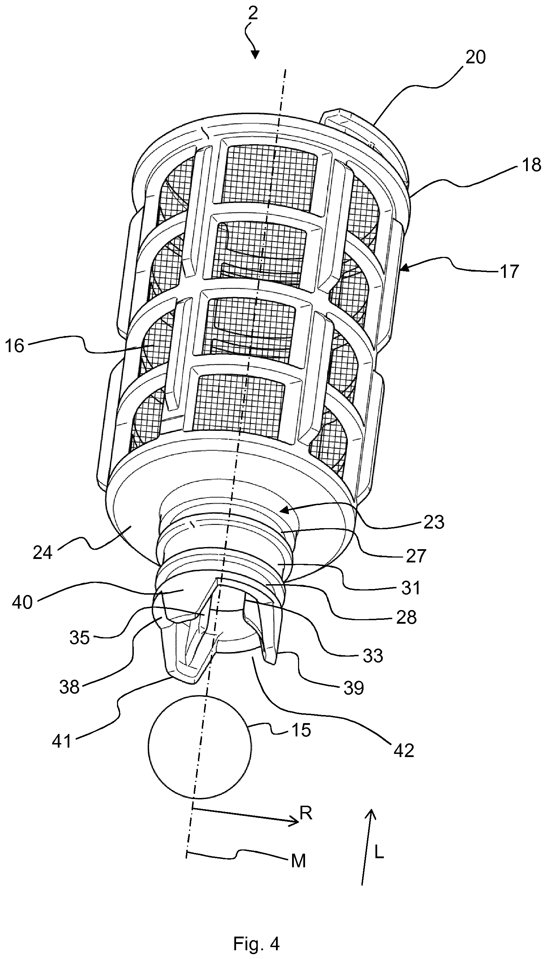

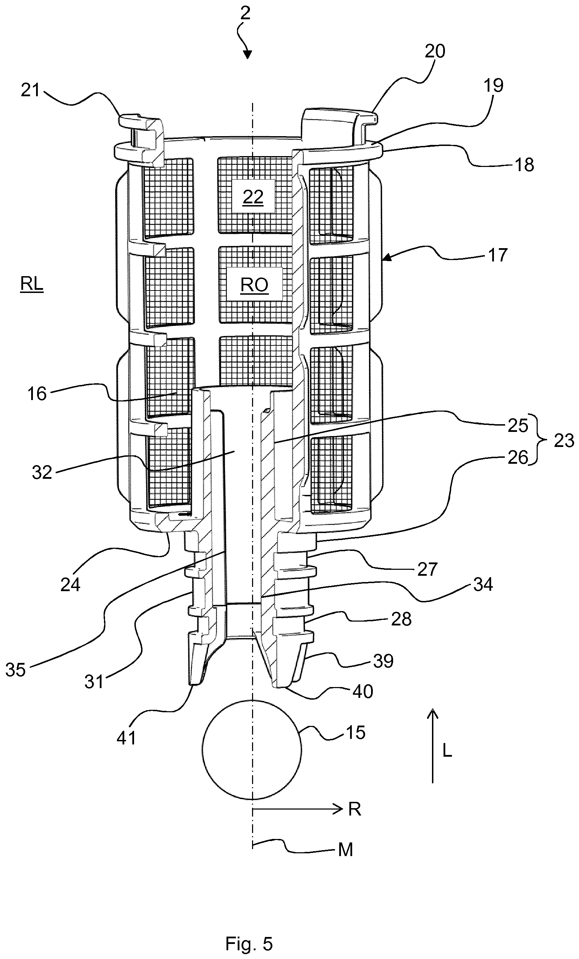

Die Filteranordnung 1 umfasst ein Filterelement 2. Das Filterelement 2 ist bevorzugt ein Siebfilterelement zum Filtern von Dieselkraftstoff einer Brennkraftmaschine, insbesondere eines Dieselmotors. Auf das Filterelement 2 wird nachfolgend noch mit Bezug auf die Fig. 4 bis 6 eingegangen. Das Filterelement 2 ist in einem Filtergehäuse 3 aufgenommen. Das Filtergehäuse 3 umfasst einen Filtergehäusetopf 4, in dem das Filterelement 2 angeordnet ist. Das Filtergehäuse 3 kann Teil eines Motorgehäuses der zuvor erwähnten Brennkraftmaschine sein.

Der Filtergehäusetopf 4 ist bevorzugt im Wesentlichen rotationssymmetrisch zu einer Mittel- oder Symmetrieachse M aufgebaut. Der Filtergehäusetopf 4 ist in der Orientierung der Fig. 1 bis 3 nach oben hin offen und kann mit Hilfe eines nicht gezeigten Filtergehäusedeckels fluiddicht verschlossen werden. Der Filtergehäusedeckel kann beispielsweise mit Hilfe eines Gewindes oder eines Bajonettverschlusses lösbar mit dem Filtergehäusetopf 4 verbunden werden. Der Filtergehäusetopf 4 umfasst einen nicht gezeigten Auslauf oder Ablauf, über den mit Hilfe des Filterelements 2 gereinigtes Reinfluid, beispielsweise gefilterter Dieselkraftstoff, abgeführt und beispielsweise einer Niederdruckpumpe eines Dieseleinspritzsystems der Brennkraftmaschine zugeführt werden kann.

Das Filtergehäuse 3 umfasst einen Aufnahmebereich 5, der als gestufte Bohrung in dem Filtergehäuse 3 ausgebildet ist. Dem Aufnahmebereich 5 wird über einen nicht gezeigten Einlauf oder Zulauf zu filterndes Rohfluid, insbesondere zu filternder Dieselkraftstoff, zugeführt. Ein Hauptstrompfad 6 des Rohfluids ist parallel zu der Symmetrieachse M orientiert.

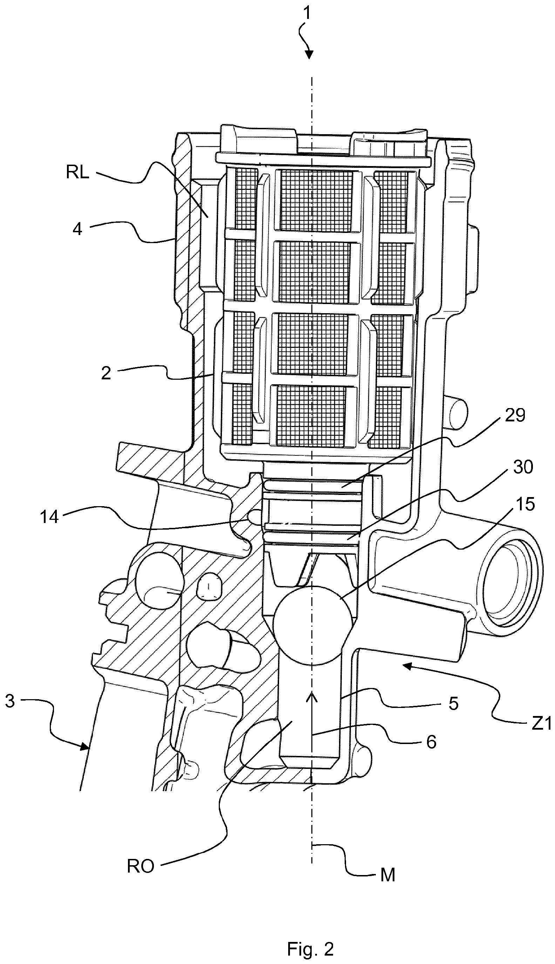

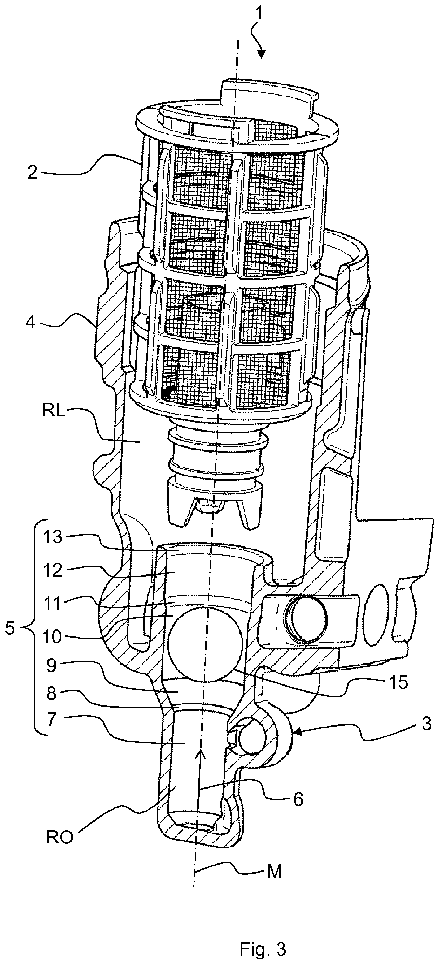

Der Aufnahmebereich 5 umfasst, wie in der Fig. 3 gezeigt, in Richtung des Hauptstrompfads 6 betrachtet einen zylinderförmigen ersten Abschnitt 7, einen sich an den ersten Abschnitt 7 anschließenden sphärisch oder kugelförmig gekrümmten Ventilsitz 8, einen sich an den Ventilsitz 8 anschließenden kegelstumpfförmigen zweiten Abschnitt 9, einen sich an den zweiten Abschnitt 9 anschließenden zylinderförmigen dritten Abschnitt 10, einen sich an den dritten Abschnitt 10 anschließenden kegelstumpfförmigen vierten Abschnitt 11, einen sich an den vierten Abschnitt 11 anschließenden zylinderförmigen fünften Abschnitt 12 sowie einen sich an den fünften Abschnitt 12 anschließenden kegelstumpfförmigen sechsten Abschnitt 13. Die Abschnitte 10 bis 13 können sich dabei rohrförmig in den Filtergehäusetopf 4 hinein erstrecken. Ein Durchmesser der Abschnitte 7 bis 13 nimmt entlang dem Hauptstrompfad 6 betrachtet ausgehend von dem ersten Abschnitt 7 hin zu dem sechsten Abschnitt 13 zu. An dem dritten Abschnitt 10 ist weiterhin ein Ablaufkanal 14 (Fig. 1 und 2) vorgesehen.

Dass der Ventilsitz 8 "sphärisch" oder "kugelförmig" gekrümmt ist, bedeutet dabei, dass der Ventilsitz 8 die Form eines Kugelsegments aufweist, das von zwei zueinander parallelen Ebenen aus einer Kugel herausgeschnitten wird. Dieses Kugelsegment wird dabei von einem Übergang des ersten Abschnitts 7 in den Ventilsitz 8 und von einem Übergang des Ventilsitzes 8 in den zweiten Abschnitt 9 begrenzt.

In dem Aufnahmebereich 5 ist ein kugelförmiger Ventilkörper 15 aufgenommen. Der Ventilkörper 15 kann auch als Ventilkugel bezeichnet werden. Der Ventilkörper 15 ist an den Ventilsitz 8 derart angepasst, dass der Ventilkörper 15 flächig an dem Ventilsitz 8 anliegen und gegenüber diesem fluiddicht abdichten kann. Der Ventilkörper 15 ist beispielsweise aus einem Kunststoffmaterial gefertigt. Bevorzugt weist das Kunststoffmaterial eine geringere Dichte als das Rohfluid auf, so dass der Ventilkörper 15 in dem Rohfluid nicht aufschwimmt. Bevorzugt ist der Ventilkörper 15 aus Polyamid (PA), insbesondere aus Polyamid 6 (PA 6), gefertigt. Der Ventilkörper 15 kann jedoch auch aus jedem anderen geeigneten Werkstoff gefertigt sein. Der Ventilkörper 15 ist insbesondere innerhalb der Abschnitte 9, 10 entlang der Symmetrieachse M, das heißt, in Richtung des Hauptstrompfads 6 beziehungsweise entgegen diesem linear beweglich.

Nun zurückkehrend zu dem in den Fig. 4 bis 6 gezeigten Filterelement 2. Das Filtermedium 16 ist bevorzugt rotationssymmetrisch zu der zuvor erwähnten Symmetrieachse M aufgebaut. Das Filterelement 2 umfasst ein Filtermedium 16. Das Filtermedium 16 kann beispielsweise ein Kunststoffnetz mit einer Maschenweite von 500 µm bis 200 µm, insbesondere von 300 µm, sein. Das Filtermedium 16 bildet eine rotationssymmetrisch zu der Symmetrieachse M aufgebaute Zylinderfläche aus.

Das Filtermedium 16 kann allerdings beispielsweise auch ein Filtergewebe, ein Filtergelege oder ein Filtervlies sein oder umfassen. Das Filtermedium 16 kann verfilzt oder vernadelt sein. Das Filtermedium 16 kann Naturfasern, wie Cellulose oder Baumwolle, oder Kunststofffasern, beispielsweise aus Polyester, Polyvinylsulfid oder Polytetrafluorethylen, aufweisen. Fasern des Filtermediums 16 können bei der Verarbeitung in, schräg und/oder quer zu einer Maschinenrichtung orientiert sein. Das Filtermedium 16 kann auch ein Filterkörper aus flächigem und zickzackförmig gefaltetem Filtermaterial sein. In diesem Fall bildet das zickzackförmige Filtermaterial das Filtermedium 16 als sternförmigen Endlosfaltenbalg aus, der im Wesentlichen eine Zylinderfläche bildet.

Das Filtermedium 16 ist von außen von einem fluiddurchlässigen Stützrohr 17 gestützt. Das Stützrohr 17 kann rohrförmig ausgebildet sein. Das Stützrohr 17 kann auch als Stützstruktur ausgebildet sein oder als solche bezeichnet werden. Vorzugsweise ist das Stützrohr 17 gitterförmig. Das Stützrohr 17 kann ein Kollabieren des Filtermediums 16 verhindern. Das Stützrohr 17 kann auch innerhalb des Filtermediums 16 angeordnet sein. Beispielsweise ist das Stützrühr 17 in einem Kunststoffspritzgussverfahren an das Filtermedium 16 angespritzt. Das Stützrohr 17 weist einen ringförmig um die Symmetrieachse M umlaufenden Ringabschnitt 18 auf. Mit Hilfe des Ringabschnitts 18 kann eine fluiddichte Abdichtung des Filterelements 2 gegenüber dem Filtergehäuse 3 erreicht werden.

Aus einer Stirnfläche 19 des Ringabschnitts 18 erstrecken sich zwei Mitnahmeelemente 20, 21 heraus. Bevorzugt sind die Mitnahmeelemente 20, 21 einteilig, insbesondere materialeinstückig, an den Ringabschnitt 18 angeformt. "Einteilig" bedeutet hierbei, dass der Ringabschnitt 18 und die Mitnahmeelemente 20, 21 zusammen ein gemeinsames Bauteil bilden. "Materialeinstückig" bedeutet hierbei, dass der Ringabschnitt 18 und die Mitnahmeelemente 20, 21 durchgehend aus demselben Material oder Werkstoff gefertigt sind.

Die Mitnahmeelemente 20, 21 können Teil eines Bajonettverschlusses sein, mit dessen Hilfe das Filterelement 2 formschlüssig mit dem zuvor erwähnten Filtergehäusedeckel verbunden werden kann. Hierzu sind an dem Filtergehäusedeckel entsprechende Mitnahmegegenelemente vorgesehen. Eine formschlüssige Verbindung entsteht durch das Ineinander- oder Hintergreifen von mindestens zwei Verbindungspartnern, in diesem Fall den Mitnahmeelementen 20, 21 und den korrespondierenden Mitnahmegegenelementen. Dadurch, dass das Filterelement 2 mit dem Filtergehäusedeckel gekoppelt ist, kann bei einem Entfernen des Filtergehäusedeckels von dem Filtergehäusetopf 4 das Filterelement 2 aus dem Filtergehäusetopf 4 herausgezogen werden.

Das Filtermedium 16 beziehungsweise das Stützrohr 17 umgrenzt einen Innenraum 22 des Filterelements 2. Der Innenraum 22 ist zylinderförmig und rotationssymmetrisch zu der Symmetrieachse M aufgebaut. Das Filterelement 2 umfasst ferner eine Ventilkörperführung 23 zum Führen des Ventilkörpers 15. Die Ventilkörperführung 23 kann mit Hilfe eines scheibenförmigen Verbindungsabschnitts 24 einteilig, insbesondere materialeinstückig, mit dem Stützrohr 17 verbunden sein. Das heißt, die Ventilkörperführung 23 kann Teil des Stützrohrs 17 sein.

Alternativ (nicht gezeigt) kann die Ventilkörperführung 23 auch lösbar mit dem Filterelement 2, insbesondere lösbar mit dem Stützrohr 17, verbunden sein. In diesem Fall kann die Ventilkörperführung 23 mit dem Filterelement 2 verschnappt, verclipst, verschraubt oder auf sonstige Art und Weise formschlüssig und/oder stoffschlüssig mit dem Filterelement 2 verbunden sein. Die Ventilkörperführung 23 kann darüber hinaus auch Teil des Filtergehäuses 3 sein und beispielsweise lösbar mit diesem gekoppelt sein.

Die Ventilkörperführung 23 ist rohrförmig und ist im Wesentlichen rotationssymmetrisch zu der Symmetrieachse M aufgebaut. Die Ventilkörperführung 23 umfasst ein sich in den Innenraum 22 des Filterelements 2 hineinerstreckendes Steigrohr 25 sowie ein einteilig, insbesondere materialeinstückig, mit dem Steigrohr 25 ausgebildetes und sich stirnseitig aus dem Verbindungsabschnitt 24 herauserstreckendes Kopplungsrohr 26, das in dem Aufnahmebereich 5 des Filtergehäuses 3 aufnehmbar ist. Das Steigrohr 25 und das Kopplungsrohr 26 sind dabei rotationssymmetrisch zu der Symmetrieachse M aufgebaut.

Außenseitig an dem Kopplungsrohr 26 sind zwei umlaufende Ringnuten 27, 28 vorgesehen, in denen zwei Dichtelemente 29, 30 (Fig. 1 und 2), insbesondere O-Ringe, aufnehmbar sind. Mit Hilfe der Dichtelemente 29, 30 ist das Kopplungsrohr 26 gegenüber dem Aufnahmebereich 5 abgedichtet. Zwischen den Ringnuten 27, 28 ist eine ringförmig um das Kopplungsrohr 26 umlaufende Ablaufnut 31 vorgesehen, die in einem in dem Filtergehäuse 3 montierten Zustand des Filterelements 2 in Fluidverbindung mit dem Ablaufkanal 14 des Filtergehäuses 3 ist (Fig. 1).

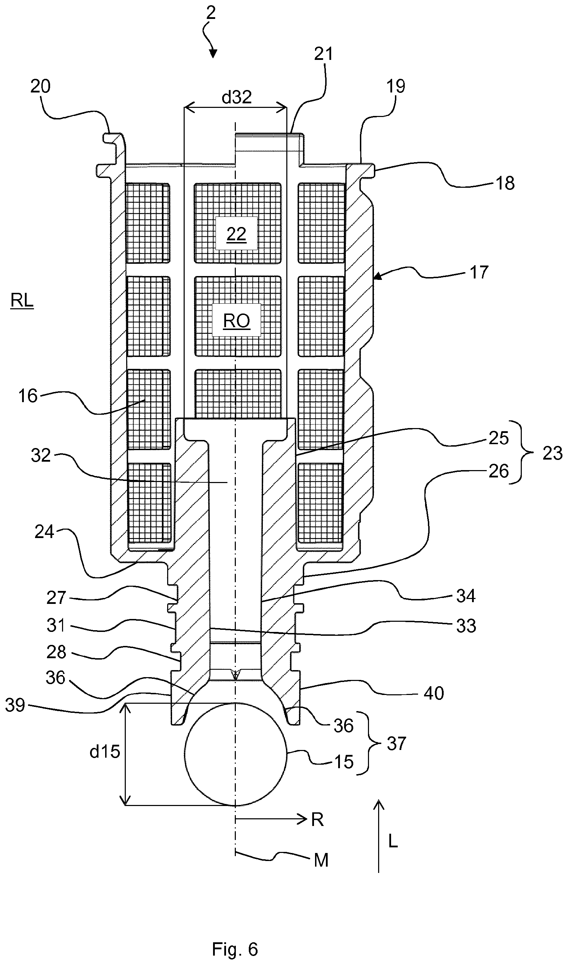

Die Ventilkörperführung 23 umfasst weiterhin einen sich durch die gesamte Ventilkörperführung 23, das heißt, sowohl durch das Steigrohr 25 als auch durch das Kopplungsrohr 26, erstreckenden Fluidkanal 32. Der Fluidkanal 32 kann einen kreisförmigen Querschnitt aufweisen. Alternativ kann der Fluidkanal 32 auch jeden beliebigen anderen Querschnitt aufweisen. Der Fluidkanal 32 weist einen Durchmesser d32 (Fig. 6) auf.

Der Fluidkanal 32 umfasst eine Längsrichtung L. Die Längsrichtung L ist parallel zu der Symmetrieachse M orientiert oder stimmt mit dieser überein. In der Orientierung der Fig. 4 bis 6 ist die Längsrichtung L von unten nach oben orientiert. Die Längsrichtung L kann jedoch auch von oben nach unten orientiert sein. Weiterhin ist dem Fluidkanal 32 auch eine Radialrichtung R zugeordnet. Die Radialrichtung R ist dabei senkrecht zu der Längsrichtung L beziehungsweise senkrecht zu der Symmetrieachse M orientiert. Dabei ist die Radialrichtung R von der Symmetrieachse M weg in Richtung einer Innenwandung des Fluidkanals 32 orientiert.

Die Ventilkörperführung 23 umfasst mehrere sich entlang der Längsrichtung L erstreckende Auflagerippen 33 bis 35. Vorzugsweise sind drei derartige Auflagerippen 33 bis 35 vorgesehen. Insbesondere sind zumindest zwei derartige Auflagerippen 33 bis 35 vorgesehen. Auf den Auflagerippen 33 bis 35 kann der Ventilkörper 15 aufliegen. Die Auflagerippen 33 bis 35 ragen in der Radialrichtung R in den Fluidkanal 32 hinein. Die Auflagerippen 33 bis 35 erstrecken sich jedoch nicht über den gesamten Durchmesser d32 des Fluidkanals 32.

Vorzugsweise sind die Auflagerippen 33 bis 35 gleichmäßig um einen Umfang des Fluidkanals 32 verteilt angeordnet. Jeder Auflagerippe 33 bis 35 ist eine gekrümmte Auflagefläche 36 (Fig. 6) für den Ventilkörper 15 zugeordnet. Die Auflagefläche 36 ist dabei bevorzugt kugelförmig oder kreiszylinderförmig gekrümmt. Das heißt, die jeweilige Auflagefläche 36 ist an eine Außenkontur des Ventilkörpers 15 angepasst. Somit ist eine Geometrie oder Krümmung der Auflagefläche 36 an einen Durchmesser d15 des Ventilkörpers 15 angepasst. Die Auflageflächen 36 der Auflagerippen 33 bis 35, der Ventilkörper 15 und der Ventilsitz 8 bilden ein Kugelventil 37 (Fig. 6), insbesondere ein Rückschlagventil, der Filteranordnung 1.

Das Kopplungsrohr 26 beziehungsweise die Ventilkörperführung 23 weist eine in Richtung des Ventilkörpers 15 orientierte Stirnfläche 38 (Fig. 4) auf, aus der sich trapezförmige Führungsabschnitte 39 bis 41 herauserstrecken. Die Führungsabschnitte 39 bis 41 sind dabei gleichmäßig über einen Umfang der Ventilkörperführung 23 verteilt angeordnet. Dabei ist jeder Auflagerippe 33 bis 35 ein derartiger Führungsabschnitt 39 bis 41 zugeordnet. Die Auflagerippen 33 bis 35 erstrecken sich dabei zumindest abschnittsweise entlang des derjenigen Auflagerippe 33 bis 35 zugeordneten Führungsabschnitts 39 bis 41. Die Auflagerippen 33 bis 35 erstrecken sich somit über die Stirnfläche 38 hinaus. Zwischen den Führungsabschnitten 39 bis 41 sind Zwischenräume 42 (Fig. 4) vorgesehen, durch die das Rohfluid hindurchströmen kann.

Das Filterelement 2 umfasst eine Rohseite RO sowie eine Reinseite RL. Die Rohseite RO ist dabei dem Innenraum 22 zugeordnet. Die Reinseite RL ist außerhalb des Filtermediums 16, das heißt in einem zwischen dem Filtermedium 16 und dem Filtergehäusetopf 4 vorgesehenen Ringraum vorgesehen. Im Betrieb der Filteranordnung 1 strömt das Rohfluid von der Rohseite RO durch das Filtermedium 16 hindurch auf die Reinseite RL, wobei Verunreinigungen von dem Filtermedium 16 zurückgehalten werden und in dem Innenraum 22 zurückbleiben.

Das Kugelventil 37 kann mit Hilfe des in Richtung des Hauptstrompfads 6 strömenden Rohfluids von einem geschlossenen Zustand Z1 (Fig. 2), in dem der Ventilkörper 15 dichtend auf dem Ventilsitz 8 anliegt, in einen geöffneten Zustand Z2 (Fig. 1), in dem der Ventilkörper 15 von dem Ventilsitz 8 abgehoben ist und an den Auflageflächen 36 der Auflagerippen 33 bis 35 anliegt, verbracht werden. Sobald kein Rohfluid mehr entlang des Hauptstrompfads 6, strömt, sinkt der Ventilkörper 15 ab und dichtet wieder gegenüber dem Ventilsitz 8 fluiddicht ab. Somit kann zuverlässig verhindert werden, dass Luft in eine an den Aufnahmebereich 5 angeschlossene Kraftstoffleitung gelangt. Hierdurch wird vermieden, dass die stromabwärts der Ventilanordnung 1 positionierte Niederdruckpumpe nach einem Austausch des Filterelements 2 Luft ansaugt.

Dadurch, dass die Auflagerippen 33 bis 35 vorgesehen sind, ist in dem geöffneten Zustand Z2 des Kugelventils 37 eine definierte Position des Ventilkörpers 15 gewährleistet. Ein um den Ventilkörper 15 herum vorgesehener Strömungsquerschnitt für das Rohfluid wird durch die Auflagerippen 33 bis 35 nur unwesentlich verengt. Ein unerwünschtes Drehen und damit ein Abnutzen des Ventilkörpers 15 kann durch die definierte Position desselben und durch das Verhindern eines Ansteigens der Strömungsgeschwindigkeit des Rohfluids aufgrund einer nur minimalen Verengung des zuvor erwähnten Strömungsquerschnitts zuverlässig verhindert werden.

Des Weiteren ist eine Fehlmontage des Ventilkörpers 15 ausgeschlossen. Der Ventilkörper 15 kann selbst dann, wenn dessen Durchmesser d15 kleiner als der Durchmesser d32 des Fluidkanals 32 ist, in der Orientierung der Fig. 4 bis 6 nicht von oben in die Ventilkörperführung 23 eingelegt werden. Dies begründet sich darin, dass die Auflagerippen 33 bis 35 so weit in den Fluidkanal 32 hineinragen, dass der Ventilkörper 15 auf diesen aufliegt. Die Auflagerippen 33 bis 35 verhindern somit zuverlässig eine Fehlmontage des Ventilkörpers 15. Insbesondere kann hierdurch ein sogenanntes fehlervermeidendes Poka Yoke-Prinzip verwirklicht werden.

Zum Austauschen des Filterelements 2 wird dieses, wie in den Fig. 2 (teilweise herausgezogen) und 3 gezeigt, aus dem Filtergehäusetopf 4 herausgezogen. Dabei kann sich in dem Filtergehäusetopf 4 befindendes Reinfluid über den Ablaufkanal 14 abfließen. Das Steigrohr 25 verhindert dabei, dass in dem Innenraum 22 angesammelte Verunreinigungen in den Aufnahmebereich 5 gelangen können.

Verwendete Bezugszeichen:
- 1: Filteranordnung
- 2: Filterelement
- 3: Filtergehäuse
- 4: Filtergehäusetopf
- 5: Aufnahmebereich
- 6: Hauptstrompfad
- 7: Abschnitt
- 8: Ventilsitz
- 9: Abschnitt
- 10: Abschnitt
- 11: Abschnitt
- 12: Abschnitt
- 13: Abschnitt
- 14: Ablaufkanal
- 15: Ventilkörper
- 16: Filtermedium/Siebgewebe
- 17: Stützrohr
- 18: Ringabschnitt
- 19: Stirnfläche
- 20: Mitnahmeelement
- 21: Mitnahmeelement
- 22: Innenraum
- 23: Ventilkörperführung
- 24: Verbindungsabschnitt
- 25: Steigrohr
- 26: Kopplungsrohr
- 27: Ringnut
- 28: Ringnut
- 29: Dichtelement
- 30: Dichtelement
- 31: Ablaufnut
- 32: Fluidkanal
- 33: Auflagerippe
- 34: Auflagerippe
- 35: Auflagerippe
- 36: Auflagefläche
- 37: Kugelventil
- 38: Stirnfläche
- 39: Führungsabschnitt
- 40: Führungsabschnitt
- 41: Führungsabschnitt
- 42: Zwischenraum

- d15: Durchmesser
- d32: Durchmesser
- L: Längsrichtung
- M: Symmetrieachse
- R: Radialrichtung
- RL: Reinseite
- RO: Rohseite
- Z1: Zustand
- Z2: Zustand

## Patentansprüche

1. Kraftstofffilterelement (2), insbesondere Siebfilterelement, mit einem Siebgewebe als Filtermedium und einem Stützrohr, welches das Siebgewebe stützt, und mit einer Ventilkörperführung (23) zum Führen eines kugelförmigen Ventilkörpers (15), wobei die Ventilkörperführung (23) einen Fluidkanal (32) und zumindest eine sich entlang einer Längsrichtung (L) des Fluidkanals (32) erstreckende Auflagerippe (33 - 35) für den Ventilkörper (15) aufweist, und wobei die zumindest eine Auflagerippe (33 - 35) radial in den Fluidkanal (32) hineinragt, wobei die Ventilkörperführung (23) ein Kopplungsrohr (26), durch das sich der Fluidkanal (32) hindurcherstreckt, und zumindest einen sich stirnseitig aus dem Kopplungsrohr (26) herauserstreckenden Führungsabschnitt (39 - 41) aufweist, und wobei sich die zumindest eine Auflagerippe (33 - 35) zumindest abschnittsweise entlang des zumindest einen Führungsabschnitts (39 - 41) erstreckt.

2. Kraftstofffilterelement nach Anspruch 1, wobei die Ventilkörperführung (23) lösbar mit dem Filterelement (2) verbunden ist.

3. Kraftstofffilterelement nach Anspruch 1 oder 2, wobei die zumindest eine Auflagerippe (33 - 35) eine gekrümmte, insbesondere eine kugelförmig gekrümmte oder kreiszylinderförmig gekrümmte, Auflagefläche (36) für den Ventilkörper aufweist.

4. Kraftstofffilterelement nach einem der Ansprüche 1 - 3, wobei die Ventilkörperführung (23) zumindest zwei Auflagerippen (33 - 35) aufweist.

5. Kraftstofffilterelement nach einem der Ansprüche 1 - 4, wobei die Ventilkörperführung (23) und die zumindest eine Auflagerippe (33 - 35) bis in einen Innenraum (22) des Filterelements (2) hineinragen.

6. Kraftstofffilterelement nach einem der Ansprüche 1 - 5, wobei sich der Führungsabschnitt (39 - 41) in Umfangsrichtung erstreckt und eine deutlich größere umfangsmäßige Ausdehnung aufweist als die Auflagerippe (33 - 35), wobei bevorzugt die umfangsmäßige Ausdehnung des Führungsabschnitts (39 - 41) zumindest doppelt so groß ist wie die umfangsmäßige Ausdehnung der Auflagerippe (33 - 35), stärker bevorzugt zumindest dreimal so groß.

7. Kraftstofffilterelement nach Anspruch 6, wobei der Führungsabschnitt (39 - 41) die Auflagerippe (33 - 35) auf einem radial äußeren Umfang umgibt.

8. Kraftstofffilterelement nach einem der Ansprüche 1 bis 7, wobei der zumindest eine Führungsabschnitt (39 - 41) trapezförmig ist.

9. Filteranordnung (1), insbesondere Siebfilteranordnung,
- mit einem Kraftstofffilterelement (2), insbesondere Siebfilterelement, mit einem Siebgewebe als Filtermedium und einem Stützrohr, welches das Siebgewebe stützt, und mit einer Ventilkörperführung (23) zum Führen eines kugelförmigen Ventilkörpers (15), wobei die Ventilkörperführung (23) einen Fluidkanal (32) und zumindest eine sich entlang einer Längsrichtung (L) des Fluidkanals (32) erstreckende Auflagerippe (33 - 35) für den Ventilkörper (15) aufweist, und wobei die zumindest eine Auflagerippe (33 - 35) radial in den Fluidkanal (32) hineinragt,
- und mit einem Filtergehäuse (3) und einem Kugelventil (37), das den kugelförmigen Ventilkörper (15) umfasst,
- wobei das Filtergehäuse (3) einen Ventilsitz (8) für den Ventilkörper (15) aufweist,
- wobei der Ventilkörper (15) in einem geschlossenen Zustand (Z1) des Kugelventils (37) an dem Ventilsitz (8) anliegt, und wobei der Ventilkörper (15) in einem geöffneten Zustand (Z2) des Kugelventils (37) an der zumindest einen Auflagerippe (33 - 35) anliegt.

10. Filteranordnung (1) nach Anspruch 9, wobei ein Durchmesser (d32) des Fluidkanals (32) größer als ein Durchmesser (d15) des Ventilkörpers (15) ist.

11. Filteranordnung nach Anspruch 9 oder 10, wobei der Ventilsitz (8) gekrümmt, insbesondere kugelförmig gekrümmt, ist.

## Claims

1. Fuel filter element (2), in particular screen filter element, having a screen mesh as filter media and a support tube supporting the screen mesh, and having a valve body guide (23) for guiding a spherical valve body (15), wherein the valve body guide (23) features a fluid channel (32) and at least one support rib (33 - 35) for the valve body (15), which support rib extends along a longitudinal direction (L) of the fluid channel (32), and wherein the at least one support rib (33 - 35) projects radially into the fluid channel (32), wherein the valve body guide (23) features a coupling tube (26) through which extends the fluid channel (32), and at least one guide portion (39 - 41) extending frontally out of the coupling tube (26), and wherein the at least one support rib (33 - 35) extends at least sectionwise along the at least one guide portion (39 - 41).

2. Fuel filter element according to claim 1, wherein the valve body guide (23) is detachably connected to the filter element (2).

3. Fuel filter element according to claim 1 or 2, wherein the at least one support rib (33 - 35) features a curved, in particular a spherically curved or circularcylindrically curved, contact surface (36) for the valve body.

4. Fuel filter element according to one of the claims 1 to 3, wherein the valve body guide (23) features at least two support ribs (33 - 35).

5. Fuel filter element according to one of the claims 1 to 4, wherein the valve body guide (23) and the at least one support rib (33 - 35) project into an interior space (22) of the filter element (2).

6. Fuel filter element according to one of the claims 1 to 5, wherein the guide portion (39 - 41) extends in the circumferential direction and features a significantly larger circumferential extension than the support rib (33 - 35), wherein preferably the circumferential extension of the guide portion (39 - 41) is at least twice as large as the circumferential extension of the support rib (33 - 35), more preferably at least three times as large.

7. Fuel filter element according to claim 6, wherein the guide portion (39 - 41) surrounds the support rib (33 - 35) on a radially exterior circumference.

8. Fuel filter element according to one of the claims 1 to 7, wherein the at least one guide portion (39 - 41) is trapezoidal.

9. Filter arrangement (1), in particular screen filter arrangement,
- having a fuel filter element (2), in particular screen filter element, having a screen mesh as filter media and a support tube supporting the screen mesh, and having a valve body guide (23) for guiding a spherical valve body (15), wherein the valve body guide (23) features a fluid channel (32) and at least one support rib (33 - 35) for the valve body (15), which support rib extends along a longitudinal direction (L) of the fluid channel (32), and wherein the at least one support rib (33 - 35) projects radially into the fluid channel (32),
- and having a filter housing (3) and a ball valve (37) comprising the spherical valve body (15),
- wherein the filter housing (3) features a valve seat (8) for the valve body (15),
- wherein the valve body (15) rests against the valve seat (8) in a closed state (Z1) of the ball valve (37), and wherein the valve body (15) rests against the at least one support rib (33 - 35) in an open state (Z2) of the ball valve (37).

10. Filter arrangement (1) according to claim 9, wherein a diameter (d32) of the fluid channel (32) is larger than a diameter (d15) of the valve body (15).

11. Filter arrangement according to claim 9 or 10, wherein the valve seat (8) is curved, in particular spherically curved.

## Revendications

1. Élément de filtre à carburant (2), notamment élément de filtre à tamis, ayant un tissu de tamis comme milieu filtrant et un tube de support soutenant le tissu de tamis, et ayant un guide de corps de soupape (23) pour guider un corps de soupape sphérique (15), le guide de corps de soupape (23) présentant un canal de fluide (32) et au moins une nervure d'appui (33 - 35) pour le corps de soupape (15), la nervure d'appui s'étendant le long d'une direction longitudinale (L) du canal de fluide (32), et la nervure d'appui (33 - 35), au moins au nombre d'une, faisant saillie radialement dans le canal de fluide (32), le guide de corps de soupape (23) présentant un tube de couplage (26), à travers lequel s'étend le canal de fluide (32), et au moins une section de guidage (39 - 41) s'étendant frontalement hors du tube de couplage (26), et la nervure d'appui (33 - 35), au moins au nombre d'une, s'étendant, au moins dans certaines sections, le long de la section de guidage (39 - 41), au moins au nombre d'une.

2. Élément de filtre à carburant selon la revendication 1, le guide de corps de soupape (23) étant relié à l'élément filtrant (2) de manière amovible.

3. Élément de filtre à carburant selon la revendication 1 ou 2, la nervure d'appui (33 - 35), au moins au nombre d'une, présentant une surface d'appui (36) bombée, notamment bombée sphériquement ou bombée en forme cylindrique circulaire, pour le corps de soupape.

4. Élément de filtre à carburant selon l'une quelconque des revendications 1 à 3, le guide de corps de soupape (23) présentant au moins deux nervures d'appui (33 - 35).

5. Élément de filtre à carburant selon l'une quelconque des revendications 1 à 4, le guide de corps de soupape (23) et la nervure d'appui (33 - 35), au moins au nombre d'une, font saillie dans l'espace intérieur (22) de l'élément filtrant (2).

6. Élément de filtre à carburant selon l'une quelconque des revendications 1 à 5, la section de guidage (39 - 41) s'étendant en direction circonférentielle et présentant une extension circonférentielle sensiblement supérieure à celle de la nervure d'appui (33 - 35), de préférence, l'extension circonférentielle de la section de guidage (39 - 41) étant au moins deux fois supérieure à l'extension circonférentielle de la nervure d'appui (33 - 35), plus préférentiellement au moins trois fois supérieure.

7. Élément de filtre à carburant selon la revendication 6, la section de guidage (39
- 41) entourant la nervure d'appui (33 - 35) sur une circonférence radialement extérieure.

8. Élément de filtre à carburant selon l'une quelconque des revendications 1 à 7, la section de guidage (39 - 41), au moins au nombre d'une, étant de forme trapézoïdale.

9. Agencement de filtre (1), notamment agencement de filtre à tamis,
- ayant un élément de filtre à carburant (2), notamment élément de filtre à tamis, avec un tissu de tamis comme milieu filtrant et un tube de support soutenant le tissu de tamis, et ayant un guide de corps de soupape (23) pour guider un corps de soupape sphérique (15), le guide de corps de soupape (23) présentant un canal de fluide (32) et au moins une nervure d'appui (33 - 35) pour le corps de soupape (15), la nervure d'appui s'étendant le long d'une direction longitudinale (L) du canal de fluide (32), et la nervure d'appui (33 - 35), au moins au nombre d'une, faisant saillie radialement dans le canal de fluide (32),
- et ayant un boîtier de filtre (3) et une soupape sphérique (37) comprenant le corps de soupape (15) sphérique,
- le boîtier de filtre (3) présentant un siège de soupape (8) pour le corps de soupape (15),
- le corps de soupape (15) reposant contre le siège de soupape (8) dans un état fermé (Z1) de la soupape sphérique (37), et le corps de soupape (15) reposant contre la nervure d'appui (33 - 35), au moins au nombre d'une, dans un état ouvert (Z2) de la soupape sphérique (37).

10. Agencement de filtre (1) selon la revendication 9, un diamètre (d32) du canal de fluide (32) étant plus grand qu'un diamètre (d15) du corps de soupape (15).

11. Agencement de filtre selon la revendication 9 ou 10, le siège de soupape (8) étant bombé, notamment bombé sphériquement.
